# EUROPEAN PATENT APPLICATION

(11) **EP 4 831 890 A1**
(43) Date of publication of application: **28.10.2026**
(21) Application number: 26173233.3
(22) Date of filing: 20.04.2026
(51) Int. Cl.: G06Q 10/20, G06Q 10/0639, G06F 21/31, G06F 21/45, G06F 21/60, G06F 21/62, H04L 9/40, H04N 1/44, G06F 9/451

(54) **PROCESSING APPARATUS AND METHOD FOR REGISTERING AUTHENTICATION INFORMATION**

(30) Priority: 25.04.2025 JP 2025073706
(71) Applicant: Sharp Kabushiki Kaisha, Sakai City, Osaka 590-8522 (JP)
(72) Inventor: TOMITA, Chikako, Osaka, 590-8522 (JP)
(74) Representative: Müller Hoffmann & Partner

(57) **Abstract**

A processing apparatus includes a registrator that registers authentication information of a service engineer, and one or more controllers that control the registrator. The one or more controllers register the authentication information, in a case where the authentication information is set by an administrator of the processing apparatus.

## Description

### BACKGROUND OF THE INVENTION

### Field of the Invention

The present disclosure relates to a processing apparatus and the like.

### Description of the Background Art

For example, Japanese Unexamined Patent Application Publication No. 2009-53807 discloses a technique in which a maintenance administrator who performs maintenance work of an information processing apparatus sets a password to be used for authentication of the information processing apparatus.

An object of the present disclosure is to provide a processing apparatus and the like to which security can be flexibly applied.

### SUMMARY OF THE INVENTION

In order to solve the above problem, a processing apparatus according to the present disclosure includes: a registrator that registers authentication information of a service engineer; and one or more controllers that control the registrator. The one or more controllers register the authentication information, in a case where the authentication information is set by an administrator of the processing apparatus.

In addition, a method for registering authentication information according to the present disclosure is a method for registering authentication information of a service engineer. The method includes registering the authentication information, in a case where the authentication information is set by an administrator of a processing apparatus.

According to the present disclosure, it is possible to provide a processing apparatus and the like to which security can be flexibly applied.

### BRIEF DESCRIPTION OF THE DRAWINGS

FIG. 1 is an external perspective view illustrating an overall configuration of an image forming apparatus according to a first embodiment.
FIG. 2 is a functional configuration diagram of the image forming apparatus according to the first embodiment.
FIG. 3 is a flowchart illustrating a flow of processing according to the first embodiment.
FIG. 4 is a flowchart illustrating a flow of processing according to the first embodiment.
FIG. 5 is a diagram illustrating an operation example according to the first embodiment.
FIG. 6 is a diagram illustrating an operation example according to the first embodiment.
FIG. 7 is a diagram illustrating an operation example according to the first embodiment.
FIG. 8 is a diagram illustrating an operation example according to the first embodiment.
FIG. 9A is a diagram illustrating an operation example according to the first embodiment.
FIG. 9B is a diagram illustrating an operation example according to the first embodiment.
FIG. 10 is a diagram illustrating an operation example according to a second embodiment.
FIG. 11 is a diagram illustrating an operation example according to the second embodiment.
FIG. 12 is a diagram illustrating an operation example according to the second embodiment.
FIG. 13 is a diagram illustrating an operation example according to a third embodiment.
FIG. 14 is a diagram illustrating an operation example according to the third embodiment.
FIG. 15 is a diagram illustrating operation authority of an administrator, a user, and a service engineer with respect to a general image forming apparatus.
FIG. 16A is a diagram illustrating a screen configuration of a service setting screen for general apparatus maintenance.
FIG. 16B is a diagram illustrating a screen configuration of a service setting screen for system maintenance including the apparatus.

### DESCRIPTION OF THE PREFERRED EMBODIMENTS

Hereinafter, embodiments of the present disclosure are described with reference to the drawings. Note that, the following embodiments are an example for describing the present disclosure, and the technical contents described in the claims are not limited to the following description.

As an operator who operates an image forming apparatus such as a multifunction peripheral, in addition to an administrator and a general user (hereinafter, simply referred to as a user), there is a service engineer (a person who is engaged in maintenance management of the image forming apparatus, and is also referred to as a maintenance administrator) who has an operation authority different from that of the administrator and the user.

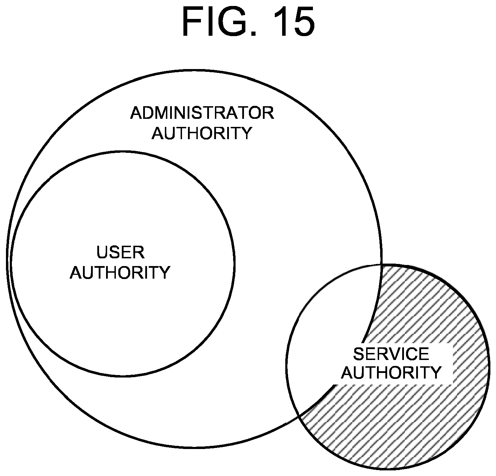

Herein, the operation authority of an administrator, a user, and a service engineer with respect to a general image forming apparatus is described with reference to FIG. 15. The administrator is an operator having an authority (administrator authority) who integrally manages the image forming apparatus, and has a wide range of operation authority with respect to the image forming apparatus, such as settings of an initial setting value related to an initial installation wizard, user management, network settings, management of consumables, and contact with a service engineer in a case where a failure or a problem occurs in the image forming apparatus, in addition to general job operations such as copying, scanning, faxing, and e-mail transmission. The user is an operator having an operation authority (user authority) related to job operations, and the user authority is an operation authority within the scope of the administrator authority, as illustrated in FIG. 15.

On the other hand, the service engineer is an operator who performs kitting at the time of initial installation, and maintenance management of the image forming apparatus, for example, maintenance work such as image quality adjustment at the time of replacement of an image former (unit), output of a test page, update of firmware, acquisition of a job log, and replacement of consumables, and has an operation authority (service authority) for apparatus maintenance for maintaining and managing the image forming apparatus. The service authority includes, for example, a minor operation authority that can be executed also by the administrator such as paper replenishment or toner replacement, but generally includes an operation authority that cannot be executed by the administrator, as illustrated by a hatched portion in FIG. 15.

In addition to such authority contents that can be operated only by the service engineer, the service engineer is generally provided with a service-dedicated service setting screen, because the operation by the service engineer may be required to be performed even in a case where the administrator is absent. On the service setting screen, the service engineer can change the settings or confirm the settings as needed.

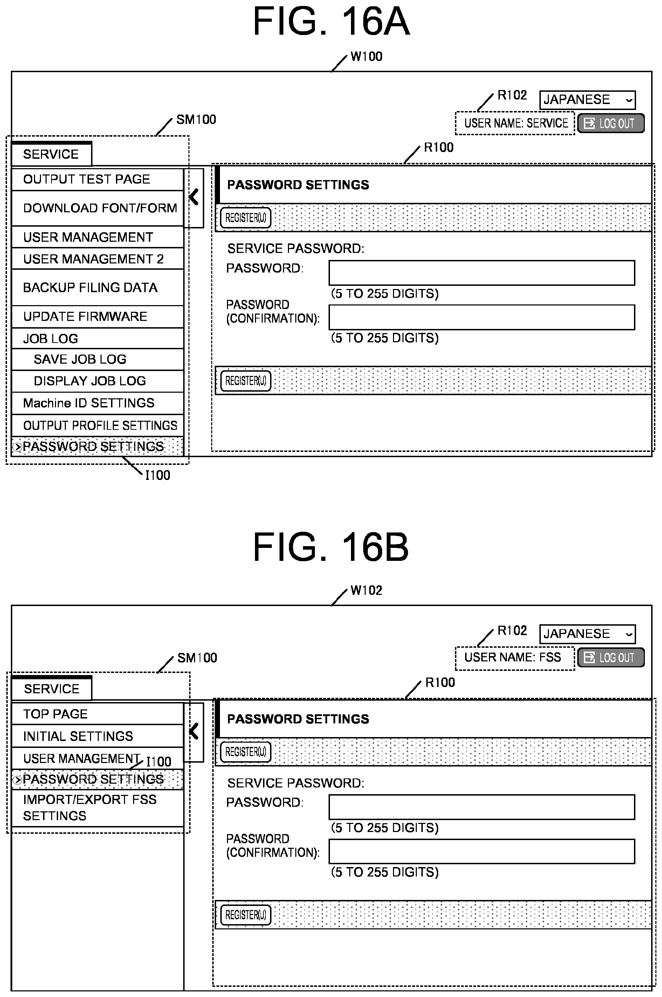

For example, FIG. 16A is a diagram illustrating an example of a display configuration of a service setting screen W100 for general apparatus maintenance (simply referred to as service). Further, FIG. 16B illustrates an example of a display configuration of a service setting screen

W102 for system maintenance (for example, field support system: FSS) including the apparatus. Note that, the service setting screen W100 illustrated in FIG. 16A, and the service setting screen W102 illustrated in FIG. 16B are screens that can be utilized by logging in to the image forming apparatus with authentication information for service (for FSS). Note that, since the service setting screen W100 and the service setting screen W102 can have the same configuration except for a configuration on display items displayed in a setting item menu SM100, the service setting screen W100 is described herein.

The service setting screen W100 illustrated in FIG. 16A includes the setting item menu SM100, a setting item input area R100, and a user name display area R102. The setting item menu SM100 is a display area for displaying setting items that can be set and confirmed by the service engineer. For example, FIG. 16A illustrates an example in which, as the setting items, "output test page", "download font/form", "user management", "user management 2", "backup filing data", "update firmware", "job log", "machine ID settings", "output profile settings", "password settings" I100, and the like are displayed in the setting item menu SM100.

The setting item input area R100 is an input area for receiving an input, a change, or the like of a setting value related to a setting item selected in the setting item menu SM100. FIG. 16A illustrates an example in which the "password settings" I100 is selected by the service engineer in the setting item menu SM100, and a setting screen related to the password settings is displayed in the setting item input area R100.

The user name display area R102 is a display area for displaying a name of an operator who has logged in to the image forming apparatus. FIG. 16A illustrates an example in which "service" is displayed in the user name display area R102, as the name of the service engineer who has logged in to the image forming apparatus.

As illustrated in FIG. 16A or FIG. 16B, the service engineer can freely set and change authentication information (password) related to a service account via the service setting screen W100 (W102).

However, the service setting screen W100 (W102) is not under the management of the administrator for the above-described reason, and it is not preferable in terms of security that the settings of the image forming apparatus can be changed in a condition in which the administrator cannot known, even for the purpose of maintenance management.

In the present disclosure, the following embodiments achieve a processing apparatus or the like to which security can be flexibly applied by registering authentication information, in a case where the authentication information of a service engineer is set by an administrator.

Herein, the authentication information according to the present disclosure is information for authenticating an operator who logs in and operates an image forming apparatus, such as an administrator, a user, or a service engineer, and is information acquired by combining identification information (also referred to as user information) for identifying a user such as a user name or an ID of a user (also referred to as a login user) who wants to log in, and confirmation information for confirming the user such as a password or a PIN, which is associated with the identification information. However, the authentication information may be identification information or confirmation information that is individually independent from each other, or may be a rule for creating the authentication information.

### 1. First Embodiment

In the first embodiment, a multifunction peripheral as an image forming apparatus in which a processing apparatus according to the present disclosure is mounted is described. The multifunction peripheral is an image forming apparatus capable of executing jobs related to copying, scanning, faxing, e-mail transmission, and the like in one housing, and, for example, capable of printing an image (a color image or a monochrome image) based on print data received as a print job on a medium such as a sheet. Note that, in a case where an image forming apparatus 10 is set to be compliant with a security enhancement act, as in the present disclosure, registration and management of authentication information of a user related to service (FSS) may be under the management of an administrator.

### 1.1 Functional Configuration of Image Forming Apparatus 10

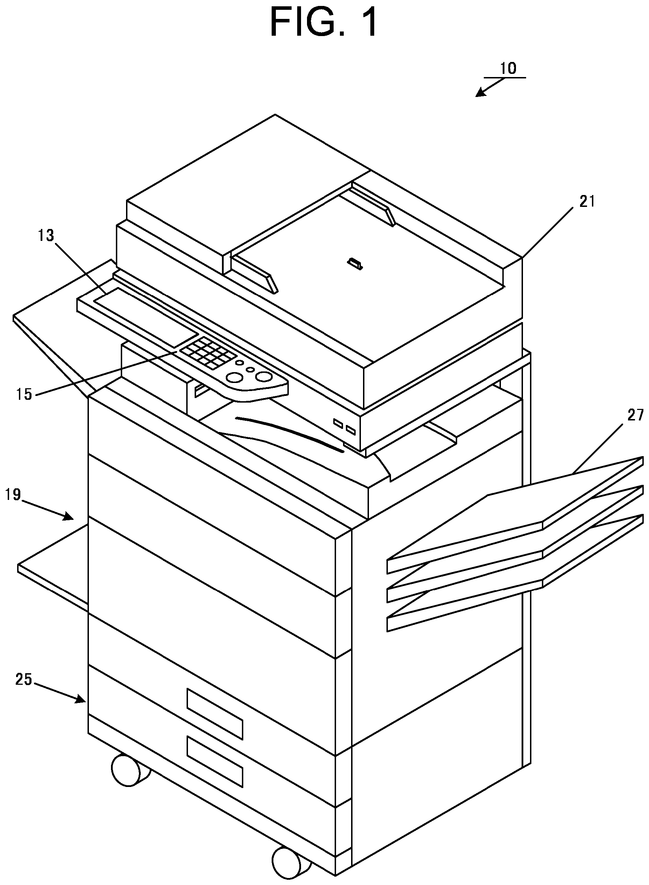

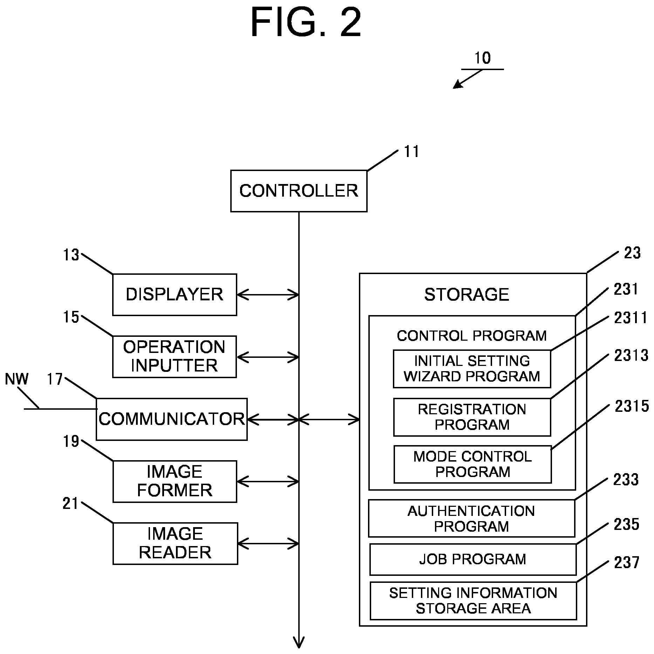

FIG. 1 is an external perspective view illustrating an overall configuration of the image forming apparatus 10 according to the first embodiment. FIG. 2 is a functional configuration diagram of the image forming apparatus 10.

The image forming apparatus 10 includes a controller 11, a displayer 13, an operation inputter 15, a communicator 17, an image former 19, an image reader 21, and a storage 23.

The controller 11 integrally controls the image forming apparatus 10. The controller 11 may be configured by one or more arithmetic devices (such as a central processing unit (CPU) or a digital signal processor (DSP)). The controller 11 reads and executes various programs stored in the storage 23, thereby implementing various functions provided by the image forming apparatus 10. Note that, the controller 11 may be configured as a system on a chip (SoC) having a plurality of functions among the functions described below. Further, the controller 11 may be configured by one or more control circuits.

The displayer 13 is a display device that displays various pieces of information to a user or the like. The displayer 13 can be configured by a display device such as a liquid crystal display (LCD), an organic electro-luminescence (EL) display, a micro-LED display, or a mini-LED display. The displayer 13 displays, for example, a wizard screen related to an initial installation wizard, and the like, in addition to a login screen for receiving an input of authentication information with respect to the image forming apparatus 10, a system setting screen, a service setting screen, and the like, which will be described later.

The operation inputter 15 is an input device that receives an operation input and an information input from the user or the like. The operation inputter 15 may be configured by, for example, various input devices such as operation keys including hardware keys or software keys, and buttons. Further, the operation inputter 15 may be configured as a touch panel display that allows an input via the displayer 13. In this case, as an input method to the touch panel display, for example, a resistive film method, an infrared method, an electromagnetic induction method, or a capacitive method can be adopted.

The communicator 17 includes, for example, an interface for a wired/wireless network communication for performing communication with another terminal device such as a PC via a network NW such as a local area network (LAN), a wide area network (WAN), the Internet, a telephone line, or a facsimile line. Note that, the interface for wireless network communication may include, for example, an interface for short-range wireless communication such as Bluetooth (registered trademark), Wi-fi (registered trademark), or IrDA.

The image former 19 forms an image based on print data on a medium such as a sheet. The image former 19 feeds a sheet from a sheet feeder 25, forms an image based on print data on the sheet, and thereafter, discharges the sheet to a sheet discharger 27. The image former 19 can be configured, for example, by a laser printer or the like utilizing an electrophotographic method. In this case, the image former 19 forms an image by using toners supplied from unillustrated toner cartridges associated with each toner color (for example, cyan, magenta, yellow, and black).

The image reader 21 scans and reads a document image to be read, thereby generating scan data. The image reader 21 may be configured, for example, as a scanner device including an image sensor such as a charge coupled device (CCD) or a contact image sensor (CIS). The configuration of the image reader 21 is not restricted, as long as the image reader 21 is configured to generate scan data composed of analog signals of RGB (R:red, G:green, B:blue) by reading a reflected light image from a document image with an image sensor. Note that, the image reader 21 may also be configured, for example, as an interface capable of acquiring an image file stored in a storage device such as a USB memory, and whose file format is TIFF, BMP, or JPEG, or image data transmitted from another terminal device such as a PC.

The storage 23 is one or more storage devices that store various programs necessary for an operation of the image forming apparatus 10, and various pieces of data. The storage 23 can be configured, for example, by a storage device such as a random access memory (RAM), a solid state drive (SSD), a hard disk drive (HDD), or a read only memory (ROM).

In the first embodiment, the storage 23 stores therein a control program 231, an authentication program 233, and a job program 235, and secures a setting information storage area 237.

The control program 231 is a program that is read by the controller 11 when the image forming apparatus 10 is integrally controlled. The controller 11 that has read the control program 231 controls driving of hardware such as the displayer 13, the operation inputter 15, the communicator 17, the image former 19, and the image reader 21.

The control program 231 includes an initial setting wizard program 2311, a registration program 2313, and a mode control program 2315. The initial setting wizard program 2311 is a program to be read at a timing when initial settings of the image forming apparatus 10 are necessary, for example, when the image forming apparatus 10 is activated for the first time after power-on (also referred to as an initial setting time or a first-time activation time), or when the image forming apparatus 10 is activated for the first time after initialization of the storage 23.

The controller 11 that has read the initial setting wizard program 2311 displays a screen (referred to as a wizard screen) for an initial setting wizard according to a preset supply destination (destination) of the image forming apparatus 10, and receives an input of setting information for initial settings. The setting information includes authentication information such as an administrator password and a service password, in addition to information related to language settings according to a destination, date information, setting information related to information handling, apparatus setting information, network setting information, and the like.

The registration program 2313 is a program that is read by the controller 11 when setting information including authentication information set via a wizard screen, a system setting screen to be described later, or the like is registered. The controller 11 that has read the registration program 2313 functions as a registrator, and in a case where the administrator changes the settings of authentication information for service (for FSS) via the wizard screen or the like, the controller 11 registers the authentication information.

The mode control program 2315 is a program that is read by the controller 11 when an operation mode of the image forming apparatus 10 is determined according to an authentication result of a login user who attempts to log in to the image forming apparatus 10. In a case where the controller 11 that has read the mode control program 2315 determines that the login user is the administrator, based on the authentication result of the login user, the controller 11 sets the operation mode of the image forming apparatus 10 to the administrator mode. On the other hand, in a case where the controller 11 determines that the login user is a user having the service authority (a user associated with the user name "service" or a user associated with the user name "FSS"), based on the authentication result of the login user, the controller 11 sets the operation mode of the image forming apparatus 10 to the service mode.

The authentication program 233 is a program that is read by the controller 11 when a login user who attempts to log in to the image forming apparatus 10 is authenticated. The controller 11 that has read the authentication program 233 is operated as an authenticator that is operated based on a user authentication function, and in a case where the user authentication function is enabled, the controller 11 causes the operation inputter 15 (displayer 13) to display a login screen to be described later, and receives an input of authentication information related to user authentication. For example, in a case where the authentication condition is a combination of a login user name and a login password, the controller 11 stores, in advance, login user names and login passwords related to user authentication by associating them with each other, and can perform user authentication by collating the login user name and the login password that have been input via the login screen. Note that, in addition to knowledge authentication based on a combination of a login user name and a login password, the user authentication can be performed, for example, by belongings authentication using a token, a key, an integrated circuit (IC) card, a smartphone, or the like, biometric authentication such as face authentication or fingerprint authentication, or the like.

The job program 235 is a program that is read by the controller 11 when various jobs such as a printing job, a copying job, a scanning job, a faxing job, or an e-mail transmission job are executed. The controller 11 that has read the job program 235 switches the operation mode of the image forming apparatus 10 to a job mode for executing each job, and executes the job for which an execution instruction has been received.

The setting information storage area 237 is a storage area for storing authentication information registered by the controller 11 that has read the registration program 2331, and various pieces of setting information received via the wizard screen.

### 1.2 Flow of Processing

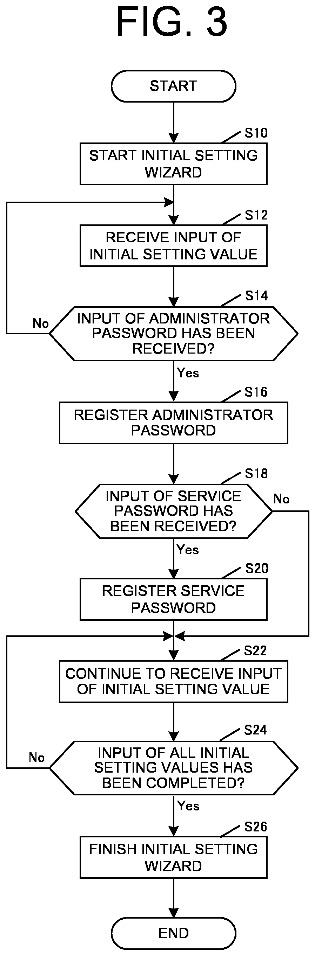

Next, a flow of processing according to the first embodiment is described. FIG. 3 is a flowchart illustrating a flow of processing for setting a service password as authentication information via a wizard screen of an initial setting wizard. Note that, the processing illustrated in FIG. 3 is described as processing to be executed by causing the controller 11 to read the control program 231 (the initial setting wizard program 2311, the registration program 2313, and the like). Further, the following description is made based on a premise that an administrator inputs initial setting values input in the initial setting wizard described with reference to FIG. 3.

The controller 11 starts the initial setting wizard, in a case where an activation timing of the image forming apparatus 10 is a timing at which initial settings of the image forming apparatus 10 are necessary, for example, when the image forming apparatus 10 is activated for the first time after power-on, or when the image forming apparatus 10 is activated for the first time after initialization of the storage 23 (step S10).

When the initial setting wizard is started, the controller 11 receives an input of an initial setting value from the user (step S12). Then, the controller 11 determines whether the input of the initial setting value is an input of an administrator password (step S14).

In a case where the controller 11 determines that the input initial setting value is the administrator password, the controller 11 registers the input administrator password (step S14; Yes → step S16). On the other hand, in a case where the controller 11 determines that the input initial setting value is not the administrator password, the controller 11 continues to receive an input of an initial setting value (step S14; No → step S12).

Next, the controller 11 determines whether an input of a service password has been received (step S18). In a case where the controller 11 determines that the input of the service password has been received, the controller 11 registers the service password whose input has been received (step S18; Yes → step S20). Note that, the service password received in step S18 can be applied as a common password for service and FSS accounts. On the other hand, in a case where the controller 11 determines that the input of the service password has not been received, the controller 11 omits the processing related to step S20, and the processing is proceeded to step S22 (step S18; No → step S22).

The controller 11 continues to receive an input of an initial setting value (step 22). Then, the controller 11 determines whether reception of an input of all the initial setting values has been completed (step S24). In a case where the controller 11 determines that reception of an input of all the initial setting values has been completed, the controller 11 finishes the initial setting wizard (step S24; Yes → step S26). Note that, in a case where the controller 11 determines that reception of an input of all the initial setting values has not been completed, the controller 11 continues to receive an input of an initial setting value (step S24; No → step S22).

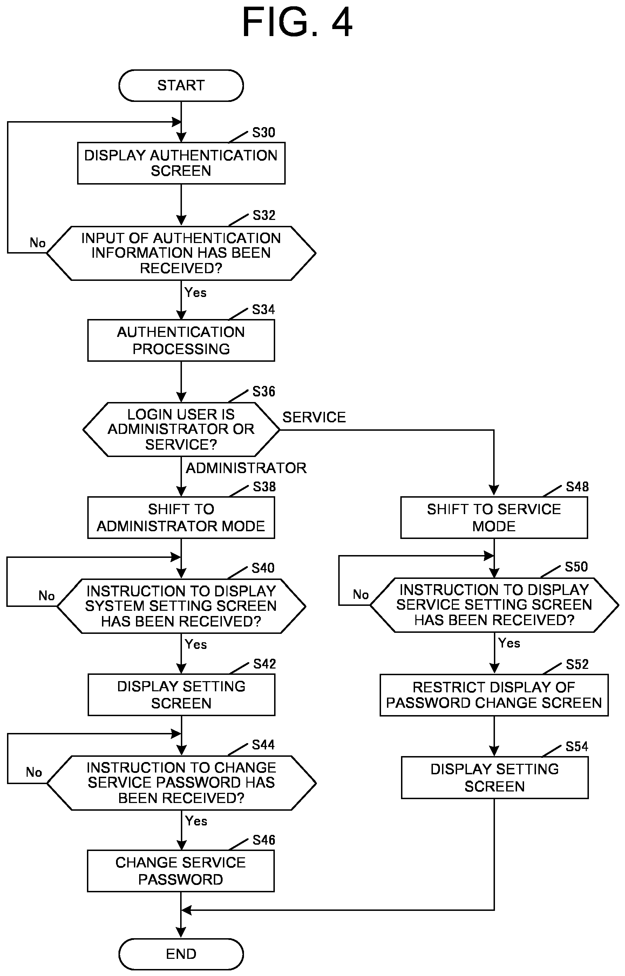

Next, processing for changing the service password according to an operation mode of the image forming apparatus 10 is described with reference to a flowchart in FIG. 4. Note that, the processing illustrated in FIG. 4 is described as processing to be executed by causing the controller 11 to read the control program 231 (the initial setting wizard program 2311, the registration program 2313, the mode control program 2315, and the like).

The controller 11 displays an authentication screen on the displayer 13 when authentication information is requested, for example, when the image forming apparatus 10 is activated, or when the image forming apparatus 10 is recovered from a sleep mode (step S30).

The controller 11 determines whether authentication information of a login user has been received via the displayed authentication screen (step S32). Herein, in a case where the controller 11 determines that an input of the authentication information of the login user has not been received, the controller 11 continues to display the authentication screen, and waits until the authentication information is input (step S32; No).

In a case where the controller 11 determines that authentication information has been input via the authentication screen, the controller 11 performs authentication processing (step S32; Yes → step S34).

The controller 11 determines whether the login user is the administrator or the service, based on the authentication processing in step S34. In a case where the controller 11 determines that the login user is the administrator, the controller 11 shifts the operation mode of the image forming apparatus 10 to the administrator mode (step S36; "administrator" → step S38).

Then, the controller 11 determines whether an instruction to display a system setting screen to be described later has been received from the administrator (step S40). In a case where the controller 11 determines that the instruction to display the system setting screen has been received, the controller 11 displays the system setting screen (step S40; Yes → step S42). Note that, in a case where the controller 11 determines that the instruction to display the system setting screen has not been received, the controller 11 waits until the instruction to display the system setting screen is received (step S40; No).

Next, the controller 11 determines whether an instruction to change the service password has been received via the displayed system setting screen (step S44). In a case where the controller 11 determines that the instruction to change the service password has been received, the controller 11 changes the service password for which the change instruction has been received, and finishes the processing (step S44; Yes → step S46).

Incidentally, in step S36, in a case where the controller 11 determines that the login user is a user having a service authority, the controller 11 shifts the operation mode of the image forming apparatus 10 to the service mode (step S36; "service" → step S48).

Then, the controller 11 determines whether an instruction to display the service setting screen has been received from the user having the service authority (step S50). In a case where the controller 11 determines that the instruction to display the service setting screen has been received, the controller 11 restricts display of a password change screen and then displays the service setting screen (step S50; Yes → step S52 → step S54). Note that, in a case where the controller 11 determines that the instruction to display the service setting screen has not been received, the controller 11 waits until the instruction to display the service setting screen is received (step S50; No).

### 1.3 Operation Example

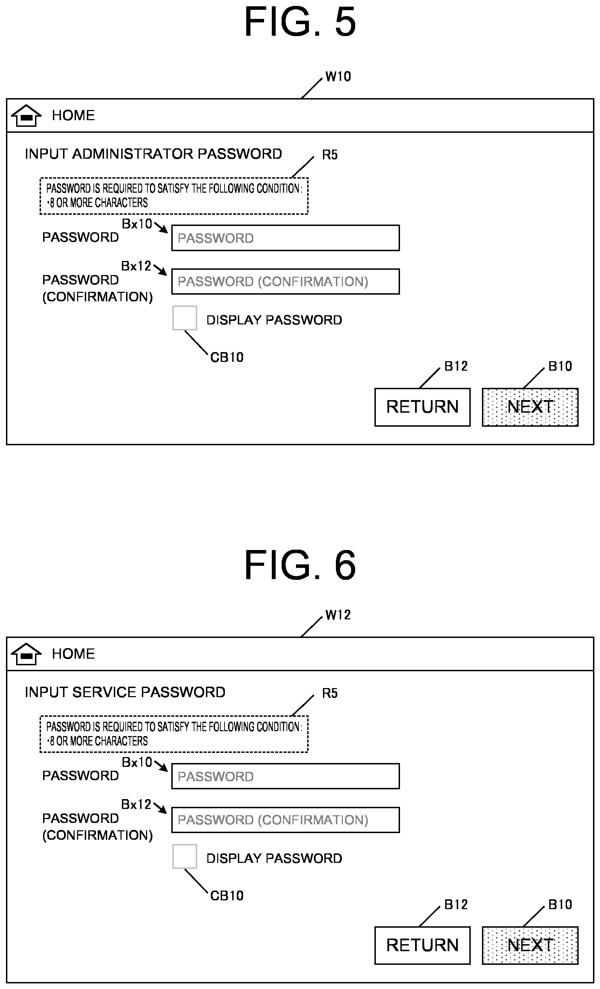

Next, an operation example according to the first embodiment is described. FIG. 5 illustrates an operation example associated with the processing related to step S14 (Yes) and step S16 in FIG. 3, and is an example of a display configuration of an input screen W10 for an administrator password. The input screen W10 is a screen included in a wizard screen for receiving an input of an initial setting value in an initial setting wizard.

The input screen W10 includes a password condition display area R5, an administrator password input box Bx10, a confirmation password input box Bx12, a next button B10, a return button B12, and a password display check box CB10.

The password condition display area R5 is a display area for displaying a necessary condition (password policy) as the administrator password, and FIG. 5 indicates that eight or more characters (string) are necessary as the administrator password.

The administrator password input box Bx10 is an input box for receiving an input of the administrator password by an administrator. The confirmation password input box Bx12 is an input box for receiving re-input of the administrator password input in the administrator password input box Bx10.

The next button B10 is a selection button for receiving an instruction to confirm the administrator password input in the administrator password input box Bx10 and in the confirmation password input box Bx12. When the administrator passwords input in the administrator password input box Bx10 and in the confirmation password input box Bx12 coincide with each other, and an instruction to select the next button B10 is received, the controller 11 registers the input administrator password, and shifts the wizard screen to a next wizard screen related to initial settings. Note that, the next button B10 may be displayed as inoperable (for example, gray-out displayed) until the password policy is satisfied, and the same content is input in the administrator password input box Bx10 and in the confirmation password input box Bx12. The return button B12 is a selection button for receiving an instruction to cancel the input of the administrator passwords that have been input in the administrator password input box Bx10 and in the confirmation password input box Bx12. When receiving the instruction to select the return button B12, the controller 11 discards the administrator passwords input in the administrator password input box Bx10 and in the confirmation password input box Bx12, and shifts the wizard screen to the wizard screen related to the previous initial settings.

The password display check box CB10 is a check box for receiving an instruction to display input contents in the administrator password input box Bx10 and in the confirmation password input box Bx12. When the password display check box CB10 is checked, the controller 11 displays the input contents in the administrator password input box Bx10 and in the confirmation password input box Bx12. On the other hand, in a case where the password display check box CB10 is not checked, the controller 11 displays the input content as the administrator password, for example, by hiding (masking) the input content with a hiding character of an asterisk "*".

FIG. 6 illustrates an operation example associated with the processing related to step S18 (Yes) and step S20 in FIG. 3, and is an example of a display configuration of an input screen W12 for a service password. Similarly to the input screen W10, the input screen W12 is a screen included in a wizard screen for receiving an input of an initial setting value in the initial setting wizard. Note that, since the display configuration of the input screen W12 can be made identical to that of the input screen W10, the display configuration of the input screen W12 is denoted with the same reference sign, and description thereof is omitted herein. Note that, the input screen W12 for the service password may be displayed only in a case where a supply destination (destination) of the image forming apparatus 10 is a specific destination such as a country or a region under the system of a security enhancement act.

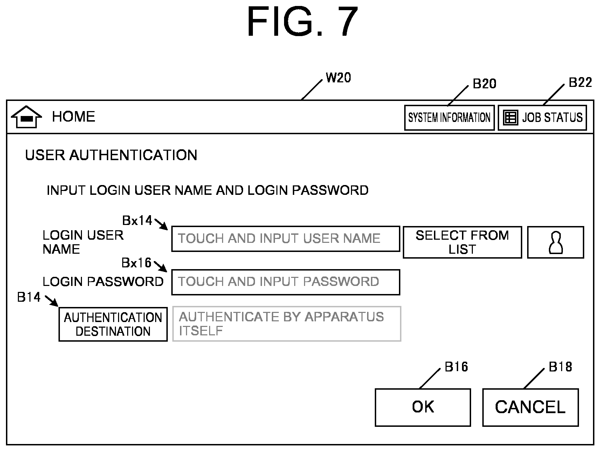

FIG. 7 illustrates an operation example associated with the processing related to step S30 in FIG. 4, and is an example of a display configuration of an authentication screen W20. The authentication screen W20 may be configured as a login screen to be displayed on the displayer 13 by the controller 11 that has read the user authentication program 233, in a case where the user authentication function is enabled.

The authentication screen W20 includes a login user name input box Bx14, a login password input box Bx16, an authentication destination designation button B14, an OK button B16, a cancel button B18, a system information button B20, and a job status button B22.

The login user name input box Bx14 is an input box for receiving an input of a user name of a login user who attempts to log in to the image forming apparatus 10. Note that, the login user name may be input directly by using an input device such as a keyboard, or may be selected and input from an unillustrated user name list to be displayed by selection of a selection button from the list.

The login password input box Bx16 is an input box for receiving an input of a login password associated with the login user name. The user who attempts to log in to the image forming apparatus 10 inputs, in the login password input box Bx16, a login password associated with the login user name input in the login user name input box Bx14.

The authentication destination designation button B14 is a selection button for receiving designation of an authentication destination for user authentication. The user authentication destination may be an apparatus itself, or, for example, an unillustrated authentication server or the like separately provided on the network NW may be designated. In a case where the apparatus itself is designated as the user authentication destination, the controller 11 performs user authentication by comparing the input login user name and login password with authentication information (for example, a combination of a user name and a password, or the like) that has been prepared (registered) in advance. On the other hand, in a case where the authentication server provided on the network NW is designated as the user authentication destination, the controller 11 performs user authentication by transmitting the input login user name and login password to the authentication server, and receiving an authentication result from the authentication server.

The OK button B16 is a selection button for receiving an instruction to execute user authentication processing based on input contents input in the login user name input box Bx14, the login password input box Bx16, and the like. When the controller 11 receives an instruction to select the OK button B16, the controller 11 performs user authentication, based on input contents input in the login user name input box Bx14 and in the login password input box Bx16. The cancel button B18 is a selection button for receiving an instruction to cancel the user authentication processing based on the input contents input in the login user name input box Bx14, the login password input box Bx16, and the like. When the controller 11 receives an instruction to select the cancel button B18, the controller 11 discards the input contents in the login user name input box Bx14, the login password input box Bx16, and the like, and cancels the user authentication processing.

The system information button B20 is a selection button for receiving an instruction to display a system information screen on which system-related settings of the image forming apparatus 10, such as machine information of the image forming apparatus 10, paper feed tray information, and an error message are aggregated. The job status button B22 is a selection button for receiving an instruction to display a processing status of a job being executed by the image forming apparatus 10, or a job reserved for execution.

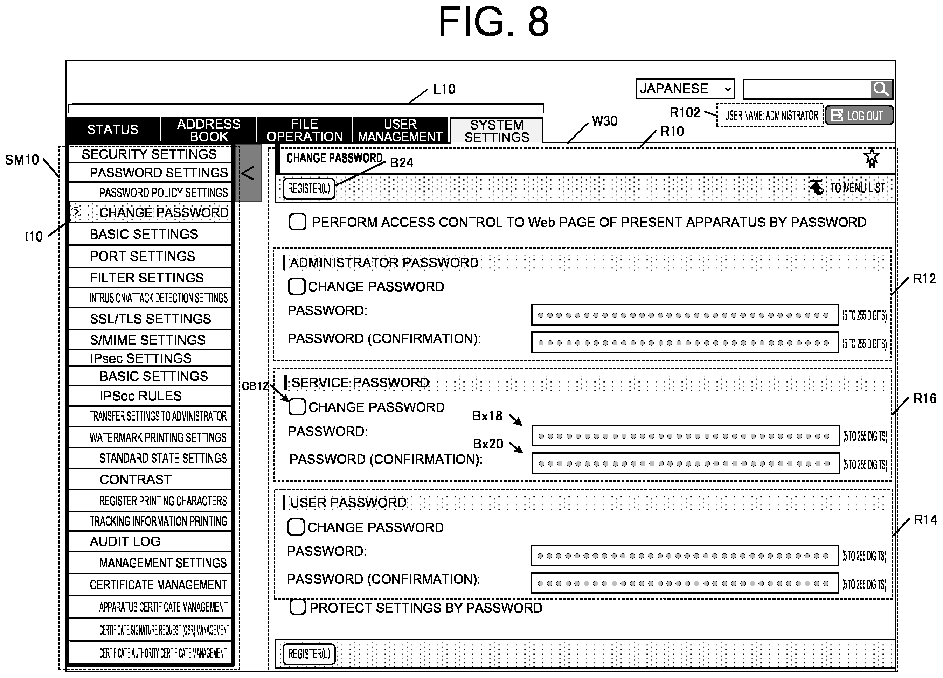

FIG. 8 illustrates an operation example associated with the processing related to step S40 (Yes) and step S42 in FIG. 4, and is an example of a display configuration of a system setting screen W30. The system setting screen W30 is a setting screen to be displayed by the controller 11 in response to receiving an instruction to select a "system setting mode" tab included in a setting mode list L10 provided in a selectable manner in an upper portion of the screen. In a case where the image forming apparatus 10 has a function of a Web server, the system setting screen W30 (a user management screen W50) illustrated in the following FIGS. 8 to 14 can also be displayed on a display device (Web browser) or the like of an unillustrated external terminal device via the Web.

The system setting screen W30 is configured in such a way as to be able to receive settings related to system settings such as home screen settings, copy settings, printer settings, facsimile image transmission settings, document filing settings, common settings, network settings, security settings, energy saving settings, system management settings, image quality adjustment settings, and initial installation settings. The controller 11 displays a setting item associated with settings selected by the user in a setting item menu SM10 provided on the left side in FIG. 8. The user can perform various settings by selecting a desired setting item.

FIG. 8 is an example in which setting items related to the security settings are displayed in the setting item menu SM10. As illustrated in FIG. 8, the security setting items include, as password settings, password policy settings and password change I10. FIG. 8 is also an example in which a setting screen for receiving an instruction to change the password is displayed in a setting item input area R10 in response to receiving an instruction to select the password change I10.

The setting item input area R10 according to the first embodiment includes a service password change area R16, in addition to a registration button B24, an administrator password change area R12, and a user password change area R14. In the first embodiment, the service password change area R16 in which an instruction to change the service password can be input is provided on the system setting screen W30 operated by the administrator (operable with the administrator authority). By providing the service password change area R16 on the system setting screen W30 operated by the administrator, management of the service password can be placed under the management of the administrator.

The registration button B24 is a selection button for receiving a registration instruction accompanied by a change of a password in the administrator password change area R12, the user password change area R14, and the service password change area R16. When receiving an instruction to select the registration button B24 from the user, the controller 11 registers the password input to be changed in each area.

Since a configuration of the service password change area R16 can be made identical to that of the administrator password change area R12 and the user password change area R14, the display configuration of the service password change area R16 is described as an example herein.

The service password change area R16 includes a password change check box CB12, a password input box Bx18, and a confirmation password input box Bx20. The password change check box CB12 is a check box for receiving an instruction to change the current preset service password. In a state where the password change check box CB12 is checked, when the same password satisfying the password policy is input in the password input box Bx18 and in the confirmation password input box Bx20, and an instruction to select the registration button B24 is received, the controller 11 changes the current preset password as the service password to the password that has been input in the password input box Bx18 and in the confirmation password input box Bx20. On the other hand, in a case where the password change check box CB12 is not checked, the controller 11 does not change the preset service password. Note that, until the password change check box CB12 is checked, the password input box Bx18 and the confirmation password input box Bx20 may be gray-out displayed so as not to receive an input for these input boxes.

The password input box Bx18 is an input box for receiving an input of a changed (new) service password. The confirmation password input box Bx20 is an input box for receiving re-input of the changed password that has been input in the password input box Bx18. On condition that the passwords input in the password input box Bx18 and in the confirmation password input box Bx20 coincide with each other, the controller 11 changes the current preset password as the service password to the passwords that have been input in the password input box Bx18 and in the confirmation password input box Bx20. In a case where the passwords input in the password input box Bx18 and in the confirmation password input box Bx20 do not coincide with each other, an error message notifying that the passwords do not coincide with each other is displayed in response to an instruction to select the registration button B24, or the like.

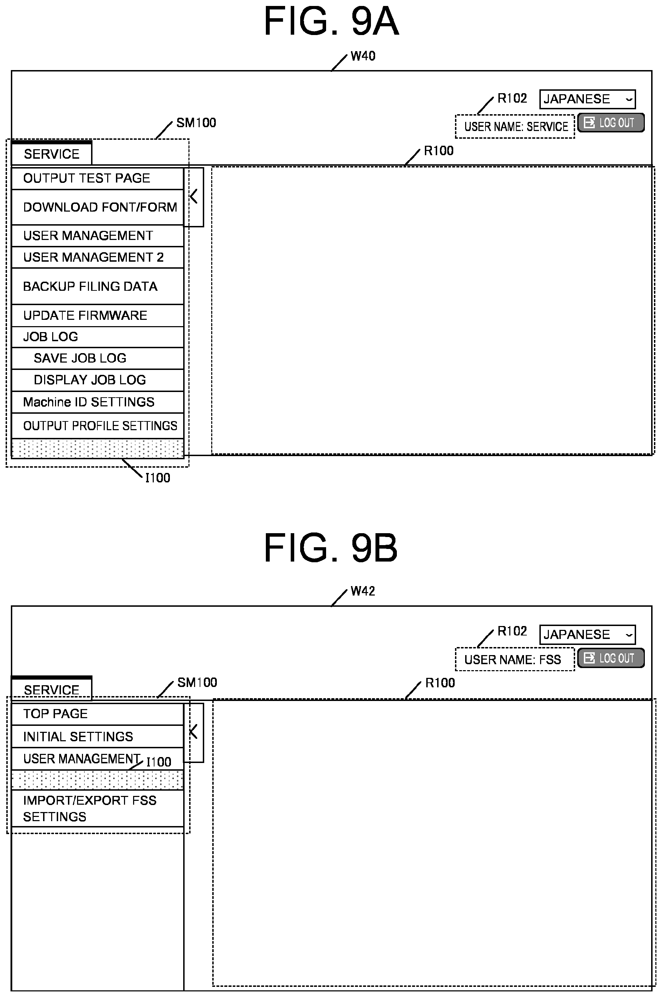

Next, FIGS. 9A and 9B illustrate an operation example associated with the processing related to step S50 (Yes) and step S52 in FIG. 4. Note that, setting screens illustrated in FIGS. 9A and 9B are setting screens displayed by the controller 11 in response to receiving an instruction to select the "system setting mode" tab included in the setting mode list L10 provided in a selectable manner in an upper portion of the system setting screen W30 illustrated in FIG. 8. FIG. 9A, which is a setting screen displayed by the controller 11, is an example of a display configuration of a service setting screen W40 for service that can be operated by the authority of a service engineer, and FIG. 9B is an example of a display configuration of a service setting screen W42 for FSS. Note that, on the service setting screen W40 (service setting screen W42 for FSS), the following restriction may be imposed only in a case where a supply destination (destination) of the image forming apparatus 10 is a specific destination such as a country or a region under the system of a security enhancement act.

The service setting screen W40 illustrated in FIG. 9A has the same configuration as that of the service setting screen W100 described with reference to FIG. 16A. However, in the example in FIG. 9A, the service setting screen W40 is different from the service setting screen W100 in a point that display of the "password settings" I100 in the setting item menu SM100 is restricted, and selection of the "password settings" is disabled.

Likewise, the service setting screen W42 for FSS illustrated in FIG. 9B has the same configuration as that of the service setting screen W102 described with reference to FIG. 16B. However, in the example in FIG. 9B, the service setting screen W42 is different from the service setting screen W100 in a point that display of the "password settings" I100 in the setting item menu SM100 is restricted, and selection of the "password settings" is disabled. Although a configuration in which display of the "password settings" I100 is restricted is described with reference to FIGS. 9A and 9B, the item of the "password settings" I100 itself may be deleted from the setting item menu SM100, or page display in the setting item input area R100 related to the "password settings" I100 may be restricted (deleted). As described above, since password settings (change) cannot be performed on the service setting screen W40 (W42) based on the service account, it is possible to prevent the service engineer from changing the settings of the password in a condition in which the administrator cannot know.

As described above, according to the first embodiment, in a case where authentication information of a user related to service (FSS) is set by an administrator of the image forming apparatus, it is possible to provide a processing apparatus or the like to which security can be flexibly applied by registering the authentication information and placing the authentication information under the management of the administrator. Note that, registration and management of the authentication information of the user related to the service (FSS) may be made under the management of the administrator only in a case where a supply destination (destination) of the image forming apparatus 10 is a specific destination such as a country or a region under the system of a security enhancement act.

### 2. Second Embodiment

The second embodiment is an embodiment in which user information related to service (FSS) is managed in a user list of an administrator. Since a functional configuration and a flow of processing of an image forming apparatus 10 according to the second embodiment can be made the same as those of the first embodiment, description thereof is omitted herein.

### 2.1 Operation Example

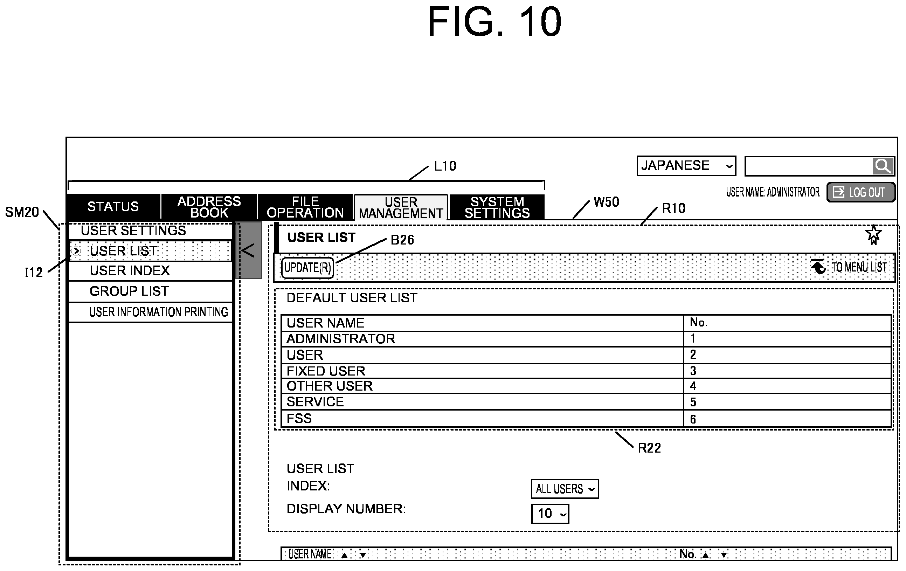

FIG. 10 is an example of a display configuration of a user management screen W50 according to the second embodiment. The user management screen W50 is a setting screen displayed by a controller 11 in response to receiving an instruction to select a "user management mode" tab included in a setting mode list L10 provided in a selectable manner in an upper portion of the screen.

The user management screen W50 displays setting items related to a user managed by the image forming apparatus 10 in a setting item menu SM20 provided on the left side in FIG. 10. The user can perform various settings by selecting a desired setting item.

FIG. 10 is an example in which a user list I12, a user index, a group list, and user information printing are displayed in the setting item menu SM20, as the setting items related to user settings, and is also an example in which a setting (update) screen for receiving an instruction to update the user list is displayed in a setting item input area R10 in response to receiving an instruction to select from the user list I12.

The setting item input area R10 according to the second embodiment includes an update button B26, and a default user list area R22. The update button B26 is a selection button for receiving an instruction to redraw the display content (screen) in the setting item input area R10. When receiving an instruction to select the update button B26, the controller 11 reads and redraws the information stored at that time in order to display, in the setting item input area R10, the display content (screen) including the default user list area R22. In a case where there is no change in the information to be updated, the stored information is redrawn as it is. However, in a case where a change is added to the stored information, for example, in a case where a user is registered/deleted, or in a case where a user name is rewritten by another person via the Web, the display content (screen) is redrawn based on the latest changed information.

The default user list area R22 is a display area for displaying a list of users registered at the time of factory shipment in the image forming apparatus 10. The default user list area R22 illustrated in FIG. 10 is an example of a user list in which "service" and "FSS" are set as management targets, in addition to, as a user name, "administrator" (administrator account of the image forming apparatus 10, which is registered at the time of factory shipment), "user" (user name applied in a case where a login name that is not registered in the image forming apparatus 10 is directly input, and logged in at the time of utilizing an authentication function via a network), "fixed user" (user name applied to a user to whom color prohibited authority is given), and "other user" (user name applied in a case where a printer job is executed with invalid user information).

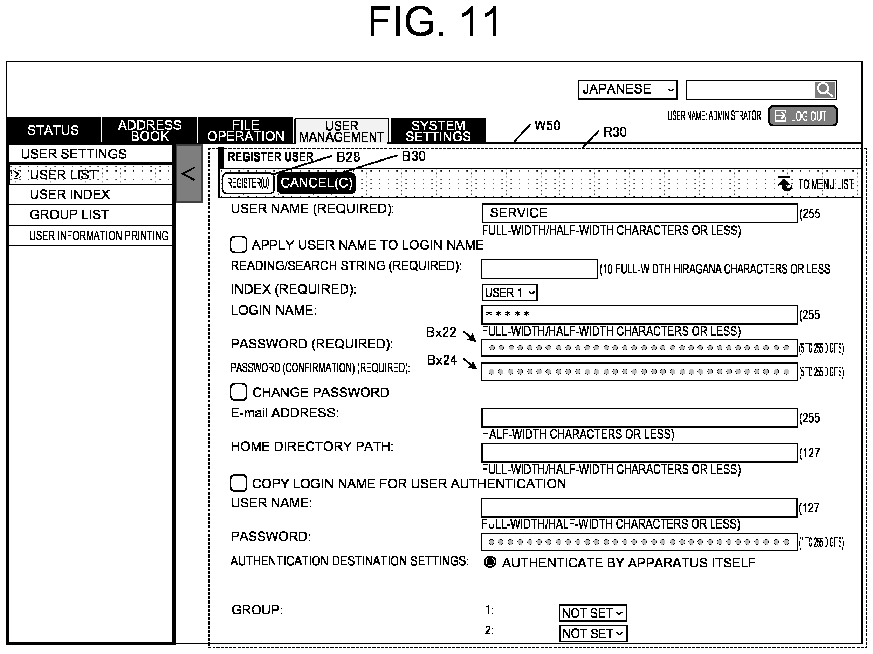

FIG. 11 is an example of a display configuration of the user management screen W50 according to the second embodiment, and is an example in which an editing screen for editing user information related to the user name "service" is provided in a setting item input area R30. Note that, the editing screen is displayed in a case where the user name "service" in the default user list area R22 in FIG. 10 is selected. The editing screen (setting item input area R30) includes a registration button B28, a cancel button B30, a password input box Bx22, and a confirmation password input box Bx24.

The registration button B28 is a selection button for receiving an instruction to register input contents input in the setting item input area R30 as an editing screen. When receiving an instruction to select the registration button B28 from the user, the controller 11 registers the input contents including a password, which are input in the setting item input area R30. The cancel button B30 is a selection button for receiving an instruction to cancel an input entered in the setting item input area R30. When receiving an instruction to select the cancel button B30, the controller 11 discards the input contents in the password input box Bx22, the confirmation password input box Bx24, and the like, and cancels the editing processing of user information. Note that, among three check boxes, i.e., "apply user name to login name", "change password", and "copy login name for user authentication" included in the editing screen (setting item input area R30), only the check box "change password" may be checked, and in a case where the check box is checked, input in the password input box Bx22, the confirmation password input box Bx24, and the like may be enabled.

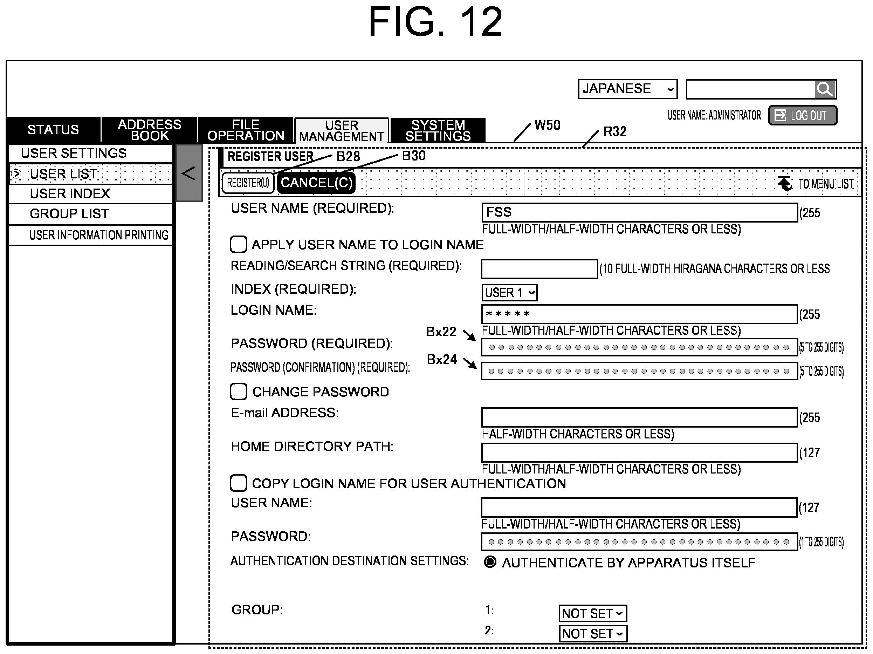

FIG. 12 is an example of a display configuration of an editing screen for editing user information related to the user name "FSS", and is an example in which the editing screen is provided in a setting item input area R32. Note that, since the configuration of the setting item input area R32 can be made identical to the configuration of the setting item input area 30 illustrated in FIG. 11, description thereof is omitted herein. Note that, the editing screen is displayed in a case where the user name "FSS" in the default user list area R22 in FIG. 10 is selected.

As described above, according to the second embodiment, in addition to the advantageous effect of the first embodiment, a user having the service (FSS) authority can be displayed as a user list on a system setting screen of an administrator, and the administrator can manage the user. Therefore, it is possible to easily manage (supervise) the user having the service (FSS) authority. Further, even in a case where a service password set at the time of initial settings is applied as a common password for service and FSS accounts, an individual password can be set for each account, and security enhancement can be achieved.

### 3. Third Embodiment

The third embodiment is an embodiment in which a password policy set on a system setting screen of an administrator is applied to password creation for service (FSS). A functional configuration and a flow of processing of an image forming apparatus 10 according to the third embodiment can be made the same as those of the first embodiment. In this case, for example, step S44 in FIG. 4 may be replaced with processing such as "change password policy".

### 3.1 Operation Example

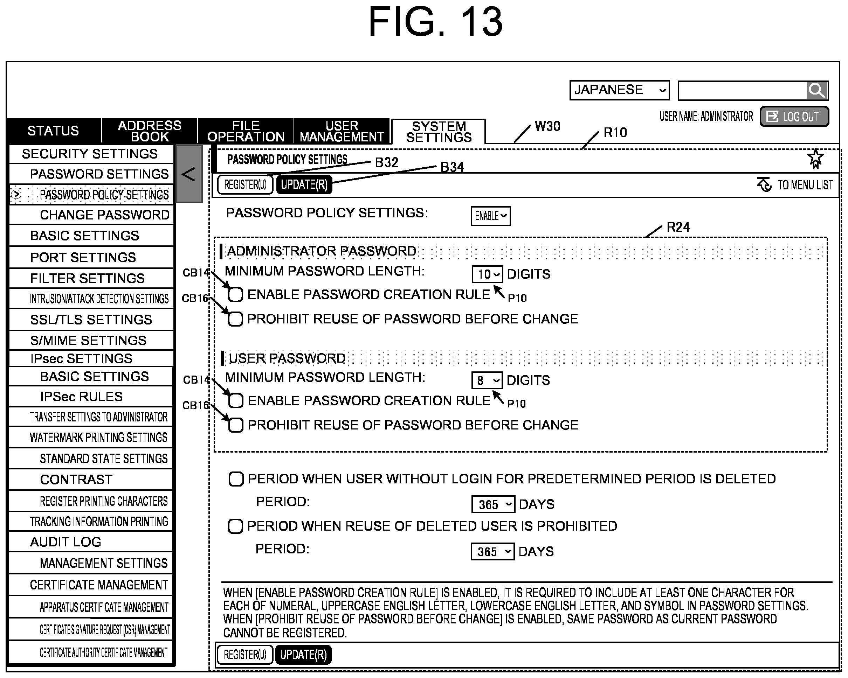

FIG. 13 is an example of a display configuration of a system setting screen W30 according to the third embodiment, and is an example in which a password policy setting screen is provided in a setting item input area R10. The setting item input area R10 includes a registration button B32, an update button B34, and a password policy setting area R24.

The registration button B32 is a selection button for receiving an instruction to register setting contents input in the setting item input area R10 as a setting screen. When receiving an instruction to select the registration button B32 from the user, a controller 11 registers setting contents including a password policy input in the setting item input area R10. Further, the update button B34 is a selection button for receiving an instruction to update the setting contents changed in the setting item input area R10. When receiving an instruction to select the update button B34 from the user, the controller 11 updates the change contents including the password policy, which are changed in the setting item input area R10.

The password policy setting area R24 is an area for receiving an input of setting a password policy applied to creation of an administrator password and a user password. Note that, since setting items of a password policy applied at the time of creating the administrator password and the user password can be made identical in terms of configuration items, herein, description is made by using a common reference sign.

The setting items of the password policy include a minimum password length pull-down menu P10, a creation rule check box CB14, and a reuse prohibition check box CB16.

The minimum password length pull-down menu P10 is a pull-down menu for receiving an instruction to select a minimum password length (character length) to be created as an administrator (user) password. FIG. 13 illustrates a state in which "10" ("8") digits are selected as the minimum password length of the administrator (user) password. The creation rule check box CB14 is a check box for receiving selection as to whether the password policy set via the password policy setting area R24 is applied to creation of the password. When the creation rule check box CB14 is checked, the controller 11 applies the password policy set via the password policy setting area R24 to password settings. Note that, when the creation rule check box CB14 is checked, a predetermined creation rule is applied to password settings, and password settings that do not satisfy the creation rule are restricted. The reuse check box CB16 is a check box for receiving selection as to whether reuse of the password used before the change is restricted. When the reuse check box CB16 is checked, the controller 11 restricts reuse of the password used before the change.

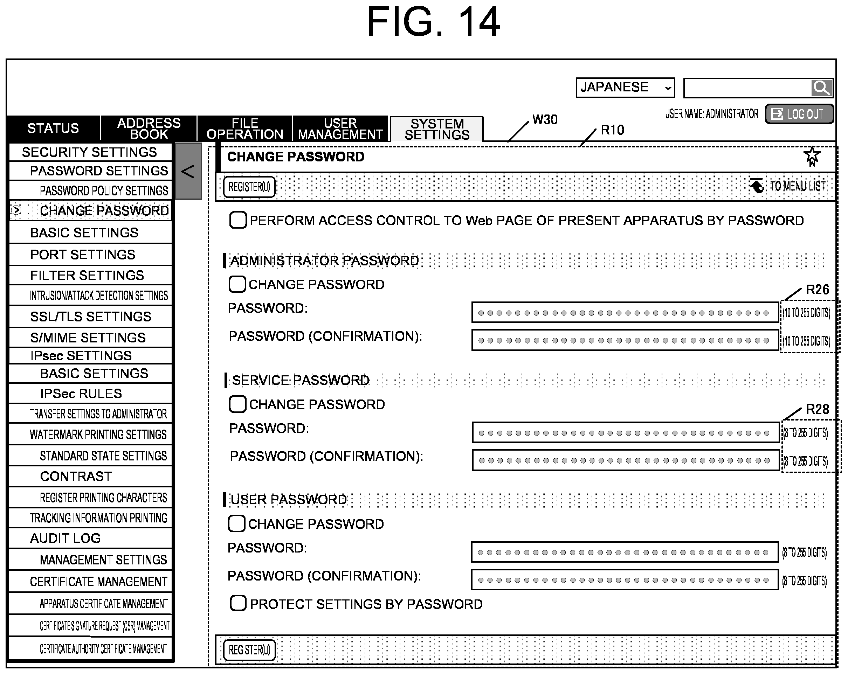

FIG. 14 is an example of a display configuration of the system setting screen W30 illustrating a state in which the password policy illustrated in FIG. 13 is applied to a setting screen (change screen) for the administrator password and the service password. The configuration other than the configuration of password length display areas R26 and R28 as the password policy can be made identical to that of the system setting screen W30 illustrated in FIG. 8.

As illustrated in FIG. 14, the password length display area R26 related to creation of the administrator password indicates a state in which the minimum password length has been changed from five digits (see FIG. 8) to ten digits. On the other hand, the password length display area R28 related to creation of the service password indicates a state in which the minimum password length has been changed from five digits (see FIG. 8) to eight digits in accordance with password policy settings of the user password.

As described above, according to the third embodiment, in addition to the advantageous effect according to the first embodiment, since a password policy set via a system setting screen operated by the administrator can be applied to password settings for service (FSS), flexible maintenance management of the apparatus can be implemented. In the third embodiment, an embodiment in which policy settings of the user password are applied as the password policy for service (FSS) has been described. However, policy settings of the administrator password may be applied as the password policy for service (FSS). It is also possible to individually set a password policy for service (FSS), and apply the individual password policy.

The present disclosure is not limited to the above-described embodiments, and various modifications are available. Specifically, embodiments to be acquired by combining technical means appropriately modified within the scope that does not depart from the gist of the present disclosure are also included in the technical scope of the present disclosure.

In addition, the above-described embodiments have parts that are described separately for convenience of explanation. However, it is needless to say that the embodiments may be combined and implemented within a technically possible range.

Further, a program that operates on each device in the embodiments is a program (program that causes a computer to function) that controls a CPU or the like in such a way as to implement the functions of the above embodiments. Further, information handled by these devices is temporarily stored in a temporary storage device (for example, RAM) at the time of processing, and thereafter, stored in a storage device such as various read only memories (ROMs) or an HDD, and is read, modified, or written by the CPU as necessary.

A non-transitory computer-readable recording medium that records a program in an information processing apparatus as referred to herein may be any of a semiconductor medium (for example, a ROM and a non-volatile memory card), an optical recording medium/magneto-optical recording medium (for example, a digital versatile disc (DVD), a magneto optical disc (MO), a mini disc (MD), a compact disc (CD), and a Blu-ray (registered trademark) disc (BD)), and a magnetic recording medium (for example, a magnetic tape and a flexible disk). In this case, not only the functions of the above embodiments are implemented by causing a computer of the image processing apparatus to read and execute the program recorded on the recording medium, but also the functions of the present disclosure are achieved through processing performed in cooperation with an operating system, another application program, or the like, based on an instruction of the program.

Further, for market distribution, the program may be stored and distributed in a portable recording medium, or transferred to a server computer connected via a network such as the Internet. In this case, it is needless to say that a storage device of the server computer is also included in the present disclosure.

Furthermore, the functional blocks or various features of the device/apparatus used in the above embodiments may be implemented or executed by an electrical circuit, for example, an integrated circuit or a plurality of integrated circuits. The electrical circuit that is designed to implement the functions described in the present specification may include a general-purpose processor, a digital signal processor (DSP), an application-specific integrated circuit (ASIC), a field programmable gate array (FPGA) or other programmable logic devices, a discrete gate or a transistor logic, a discrete hardware component, or any combination thereof. The general-purpose processor may be a microprocessor, a conventional processor, a controller, a microcontroller, or a state machine. The above-described electric circuit may be configured by a digital circuit or an analog circuit. Furthermore, in a case where an integrated circuit technology that replaces the current integrated circuits appears due to progress of the semiconductor technology, one or more aspects of the present disclosure can use a new integrated circuit according to the technology.

### REFERENCE SIGNS LIST

10 Image forming apparatus
11 Controller
13 Displayer
15 Operation inputter
17 Communicator
19 Image former
21 Image reader
23 Storage
231 Control program
2311 Initial setting wizard program
2313 Registration program
2315 Mode control program
233 Authentication program
235 Job program
237 Setting information storage area

## Claims

1. A processing apparatus (10) comprising:
a registrator (11) that registers authentication information of a service engineer; and
one or more controllers (11) that control the registrator, wherein
the one or more controllers (11) register the authentication information, in a case where the authentication information is set by an administrator of the processing apparatus (10).

2. The processing apparatus (10) according to claim 1, wherein
in an initial setting wizard to be executed in initial settings of the processing apparatus (10), the one or more controllers (11) register the authentication information set by the administrator via a wizard screen.

3. The processing apparatus (10) according to claim 2, wherein
the one or more controllers (11) register common authentication information for a plurality of pieces of the authentication information for the service engineer.

4. The processing apparatus (10) according to claim 1, wherein
the one or more controllers (11) receive a change in the authentication information via a setting screen operable with an authority of the administrator.

5. The processing apparatus (10) according to claim 1, wherein
the one or more controllers (11) restrict a change in the authentication information via a setting screen operable with an authority of the service engineer.

6. The processing apparatus (10) according to claim 4, wherein
the one or more controllers (11) apply, to the authentication information of the service engineer, a password policy set via the setting screen operable with the authority of the administrator.

7. A method for registering authentication information of a service engineer, the method comprising:
registering the authentication information, in a case where the authentication information is set by an administrator of a processing apparatus.
